Europäisches Patentamt

European Patent Office

Office européen des brevets

(19)

(11) Veröffentlichungsnummer : **0 017 119**
**B1**

(12) **EUROPÄISCHE PATENTSCHRIFT**

(45) Veröffentlichungstag der Patentschrift :
28.04.82

(21) Anmeldenummer : 80101533.0

(22) Anmeldetag : 24.03.80

(51) Int. Cl.³ : **C 09 G   1/10**

(54) **Selbstglänzendes Schuh- und Lederpflegemittel.**

(30) Priorität : 27.03.79 AT 2275/79

(43) Veröffentlichungstag der Anmeldung :
15.10.80 (Patentblatt 80/21)

(45) Bekanntmachung des Hinweises auf die Patenterteilung : 28.04.82 Patentblatt 82/17

(84) Benannte Vertragsstaaten :
BE CH DE FR GB IT NL SE

(56) Entgegenhaltungen :
DE - A - 1 812 147
FR - A - 1 084 641

(73) Patentinhaber : **Henkel Kommanditgesellschaft auf Aktien-Patentabteilung- Postfach 1100 Henkel-strasse 67 D-4000 Düsseldorf 1 (DE)**

(72) Erfinder : **Frieser, Erich Paul**
**Ortliebgasse 24/2/1/4**
**A-1170 Wien (AT)**
Erfinder : **Pfeifer, Franz**
**Donaustadtstrasse 30/17/4**
**A-1220 Wien (AT)**

Imprimerie Jouve, 18, rue St-Denis, 75001 Paris, France

EP 0 017 119 B1

# 0 017 119

« Selbstglänzendes Schuh- und Lederpflegemittel »

Selbstglänzende Pflegemittel für Fußböden sind seit vielen Jahren auf dem Markt und haben die Bohnerwachse nahezu völlig verdrängt. Bei diesen Fußbodenpflegemitteln handelt es sich um wässrige Kunststoff- und Wachsemulsionen, die auf Fußbodenbelägen, zum Beispiel aus PVC einen hohen Selbstglanz mit hoher Strapazierfähigkeit ergeben. Der an sich naheliegende Einsatz derartiger Produkte für Schuhe scheitert daran, daß diese Fußbodenpflegemittel auf dem Schuhoberleder eine viel zu geringe Filmelastizität aufweisen, beziehungsweise bei Mehrfachauftrag dicke Filmschichten am Schuhoberleder entstehen, welche gegenüber Knick-Beanspruchungen während des Gehens nicht beständig sind und es dann zum Abblättern, beziehungsweise Brechen der Filmschichten kommt. Ein weiterer Nachteil derartiger Produkte für die Anwendung auf Schuhen besteht darin, daß zufolge der hohen Film-addition die Narbenstruktur des Leders überdeckt wird und weiter der Feuchtigkeitsaustausch nach Außen reduziert wird.

Vereinzelt wurden Selbstglanzprodukte für Schuhe angeboten, wobei man im wesentlichen 2 Produktarten unterscheiden kann :

a) Produkte mit gutem Selbstglanz, jedoch folgenden Nachteilen :
— Mangelhafte Haftfestigkeit des Filmes auf dem Schuhleder.
— Geringe Filmelastizität, beziehungsweise harte Filme, die an den stark beanspruchten Knickstellen des Schuhs zum Brechen oder Ablösen der Filme führen und dann ein unschönes Aussehen der Schuhe bewirken.
— Ausgeprägte Neigung zur Filmaddition, das heißt Entstehen stärkerer Filmschichten, die zum Teil die natürliche Narbenstruktur des Leders überdecken und die Atmungsfähigkeit des Schuhleders reduzieren.
— Auftreten von Verkrustungen, zum Beispiel bei Schuhen mit eingesetzten Flecht- oder Nahtteilen.
— Schlechte Verlaufseigenschaften und ungenügende Entfernbarkeit der Filme.
b) Produkte mit geringem Selbstglanz, mit nachstehend aufgeführten Mängeln :
— Zu geringe Filmhärte, wobei Tragebeanspruchung leicht zur Abscheuerung der Schuhfilme führen.
— Neigung zur Filmaddition nach Mehrfachanwendung, woraus brüchige, klebrige und leicht anschmutzbare Filme resultieren.
— Geringe Wasserbeständigkeit, die unter Umständen zur Fleckbildung führt.
— Mangelhafte Reinigungswirkung.

Diese vom Verbraucher leicht erkennbare Nachteile haben dazu geführt, daß trotz der Arbeitsersparnis - kein Polieren notwendig - derartige Pflegemittel für Schuhe praktisch keine Marktbedeutung erringen konnten. Nach wie vor werden deshalb zur Schuhpflege nahezu ausschließlich die herkömmlichen Schuhpasten auf Basis von Wachsen und Lösungsmitteln (Testbenzin und Terpentin) eingesetzt, bei denen nach dem Auftrag ein eigener Poliervorgang mittels Lappen oder Bürsten zur Glanzerreichung oder Egalisierung notwendig ist. Diese Schuhpasten haben überdies auch noch den Nachteil, daß sie zum Austrocknen neigen (Lösungsmittelverlust) beziehungsweise durch den Lösungsmittelgehalt feuergefährlich sind.

Es stellte sich daher die Aufgabe, ein selbstglänzendes Schuh- und Lederpflegemittel zu entwickeln, welches folgende Produkteigenschaften aufweist :

1. Hoher tragebeständiger Selbstglanz.
2. Selbstregulierende Filmbildung, so daß es auch bei Mehrfachauftrag zu keiner störenden Filmaddition kommt.
3. Gut haftende und elastische, widerstandsfähige Pflegemittelfilme, die auch extremen Knickbeanspruchungen widerstehen.
4. Leichte Auftragbarkeit des Produktes, zum Beispiel mittels Schaumstoffschwämmchen oder speziellen Dispensern.

Es konnte nun überraschend festgestellt werden, daß man ein all diesen Anforderungen entsprechendes Selbstglanz-Pflegemittel für Schuhe und Leder durch geeignete Kombination bestimmter, an sich bekannter Rohstoffe, erhält. Das gegenständliche Schuh- und Lederpflegemittel, deren wesensbestimmende Eigenschaft die regulierte Bildung von widerstandsfähigen Filmen darstellt, basiert auf folgenden Bestandteilen :

a) Ternäres Wachs/Polymergemisch ;
b) Flüssige Plastifikatoren ;
c) Wasserlösliche organische Lösungsmittel ;

Darüber hinaus enthalten diese Produkte noch die von Fußbodenpflegemitteln her bekannten Zusätze an Netz- und Verlaufsmitteln, Entschäumern, Konservierungsmitteln, Parfüms, sowie abweichend von Fußbodenpflegemitteln noch ausgewählte wasserlösliche oder nicht wasserlösliche hoch lichtbeständige Farbstoffe.

Diese selbstregulierende Filmbildung der neuen Pflegemittel für Schuhe und Leder beruht darauf,

2

0 017 119

daß bei Neuauftrag des Produktes auf das behandelte Schuhleder eine gesteuerte Anlösung des vorbehandelten Filmes erfolgt, wobei mittels der Auftragevorrichtung, zum Beispiel ein Kunststoffschwamm, ein Teil des alten Filmes aufgenommen wird und zusammen mit dem neu aufzubringenden Pflegemittel eine homogene Verteilung und Filmegalisierung erfolgt.

Diese zuvor erwähnte regulierte Filmbildung basiert auf dem Einsatz ternärer Wachs/Polymergemische in Kombination mit wasserlöslichen Plastifikatoren, sowie organischen Lösungsmitteln.

1. Ternäres Wachs/Polymergemisch

Bei den erfindungsgemäßen Schuhpflegemitteln werden ternäre Wachs/Polymergemische nach folgender Art eingesetzt :

a) Polyethylenwachse

Vorzugsweise eignen sich hier anoxidierte Polyethylenwachse, die neben Carboxyl-Gruppen noch weitere funktionelle Gruppen wie Ester-, Carbonyl- oder Hydroxyl-Gruppen enthalten. Das durchschnittliche Molekulargewicht geeigneter Polyethylenwachs-Oxydate liegt zwischen 1 000 und 20 000, bei einer Säurezahl zwischen 15 und 30.

Auch nicht oxidierte Polyethylenwachse mit durchschnittlichem Molekulargewicht zwischen 2 000 und 10 000 können eingesetzt werden. Die Polyethylenwachse, beziehungsweise Polyethylenwachs-Oxydate sind einerseits für Widerstandsfähigkeit des Pflegefilmes, dessen schmutzabweisende Wirkung und Glanz verantwortlich. Andererseits sind sie für die Regelung der partiellen Anlösung der Filme bei Neuauftrag und damit für die regulierte Filmbildung wichtig.

b) Metallsalzfreie Acrylate oder Styrol-Acrylat-Copolymere

Diese Bestandteile wirken einerseits bei der Glanzgebung der Filme mit, andererseits sind sie die Grundlage für eine ausreichende Haftfestigkeit der Filme an der Lederoberfläche. Metallvernetzte Polymere eignen sich für die erfindungsgemäßen Schuhpflegemittel nicht.

c) Montansäureesterwachse

Zur Steuerung der Filmgeschmeidigkeit, sowie der selbsttätigen Filmegalisierung unter Tragebeanspruchungen werden Montansäureesterwachse mit Säurezahlen von 20 bis 100 und Verseifungszahlen zwischen 80 und 160 eingesetzt. Zur Verbesserung der Emulgierung können diese Esterwachse mit Aminen angeseift werden. Zur Emulgierung dieses ternären Wachsgemisches eignen sich vorzugsweise ethoxylierte Fettalkohole oder Alkylphenole mit 10 bis 30 Mol Ethylenoxid.

2. Flüssige Plastifikatoren

Bei den erfindungsgemäßen Pflegemitteln erfolgt die Steuerung der regulierten Filmbildung und Elastizität neben dem zuvor angeführten ternären Wachs/Polymergemischen mittels eines Plastifikator-Systems, welches aus den an sich bekannten Phthalsäureestern, zum Beispiel Butylphthalat oder Phoshporsäureester, Tributoxyethylphosphat und wasserlöslichen Etheralkoholen, wie Diethylenglykol-Monoethylether, Ethylenglykol-Monobutylether, Diethylenglykolmonobutylether, besteht. Die Kombination dieser flüssigen Plastifikatoren ist einerseits wichtig für die regulierte Filmbildung, andererseits auch für die Erreichung eines gutes Verlaufs auf behandeltem und unbehandeltem Schuhleder, sowie einer ausreichenden Reinigungswirkung auf verschmutzten Schuhen.

3. Organische Lösungsmittel

Bei gegenständlichen Pflegemitteln werden hierzu aliphatische Mono- und Dialkohole eingesetzt, die in Kombination mit den wasserlöslichen Plastifikatoren für eine gesteuerte Filmanlösung sehr wesentlich sind. Es eignen sich hierzu Methanol, Ethanol, Propanol, Ethylenglykol, Butylenglykol oder Propylenglykol. Gleichzeitig sorgen diese Lösungsmittel auch für ein rasches Trocknen der Pflegemittel.

4. Die weiteren Bestandteile dieser Pflegemittel sind noch Netz- und Verlaufsmittel auf Basis von anionaktiven oder nichtionogenen Fluorcarbontensiden, Konservierungsmittel auf Basis von Aldehyden oder p-Chlor-m-kresol, Entschäumungsmittel auf Silikonbasis, sowie Parfüm und Farbstoffe.

Der Festkörpergehalt der fertigen Schuh- und Lederpflegemittel soll zwischen 10 und 20, vorzugsweise zwischen 12 und 16 % liegen.

Eine beispielsweise Zusammensetzung eines erfindungsgemäßen Schuhpflegemittels lautet :

Polyethylenwachs, vorzugsweise an oxydiertes Polyethylenwachs 2,0 bis 10,0 %, vorzugsweise 3,0 bis 8,0 %.

Nicht metallvernetzte Acrylate, beziehungsweise Styrol-Acryl-Copolymeren 2,0 bis 10,0 %, vorzugsweise 3,0 bis 8,0 %.

Montansäureesterwachse 0,5 bis 8,0 %, vorzugsweise 0,5 bis 4,0 %.

Flüssige Plastifikatoren binäres System aus Phthalsäureester und/oder Phosphorsäureester und Etheralkoholen, 0,2 bis 5,0 %, vorzugsweise 0,5 bis 2,0 %.

Aliphatische Mono- und Dialkohole 2,0 bis 10,0 %, vorzugsweise 5,0 %.

Fluorcarbontenside 0 bis 0,5 %, vorzugsweise 0,01 bis 0,2 %.

Silikonentschäumer 0,1 bis 0,2 %.

Konservierungsmittel, vorzugsweise Aldehyde 0,1 bis 0,5 %.

Parfüm 0 bis 1,0 %, vorzugsweise 0,5 %.

Farbstoff 0 bis 2,0 %.

Rest Wasser.

Erfindungsgemäße Schuhpflegemittel (Rezeptur D, E und F) wurden mit einigen Selbstglanzpflegemitteln verglichen ; geprüft wurden folgende Eigenschaften :

| | Rez. A | Rez. B | Rez. C | Rez. D | Rez. E | Rez. F |
|---|---|---|---|---|---|---|
| 1. Selbstglanz | ++ | +++(+) | +++ | +++ | +++ | +++ |
| 2. Regulierte Filmbildung | + | − | +(+) | +++ | +++ | +++ |
| 3. Wasserbeständigkeit | − | ++ | ++ | ++ | ++ | ++ |
| 4. Knickbeständigkeit | +++ | ++(+) | +++ | +++ | +++ | +++ |
| 5. Filmhärte | − | +++ | ++(+) | ++ | ++ | ++ |
| 6. Reinigungswirkung | − | +(+) | +(+) | ++ | ++ | ++ |
| 7. Abriebfestigkeit | + | +(+) | ++(+) | +++ | +++ | +++ |

+++ = sehr gut
− = sehr gering

Die Wirkung des Schuhpflegemittels mit regulierter Filmbildung geht aus der nachfolgenden Gegenüberstellung hervor, wobei die Rezeptur B und die Rezeptur D geprüft wurden. Die Prüfung erfolgte in der Form, daß jeweils auf 100 cm² Linoleum und PVC mittels eines Kunststoffschwammdispensers die Produkte bei Raumtemperatur aufgetragen wurden und nach Trocknung bei 40 °C die Rückstandsmenge (= Film) durch Wägung ermittelt wurde. Die angegebenen Werte sind Werte von Doppelbestimmungen :

| | Linoleum | | PVC | |
|---|---|---|---|---|
| | Rez. B | Rez. D | Rez. B | Rez. D |
| | in g | | in g | |
| 1. Auftrag | 0,02 | 0,01 | 0,01 | 0,01 |
| 2. Auftrag | 0,03 | 0,01 | 0,02 | 0,01 |
| 3. Auftrag | 0,06 | 0,02 | 0,05 | 0,02 |
| 4. Auftrag | 0,09 | 0,03 | 0,08 | 0,04 |
| 5. Auftrag | 0,12 | 0,04 | 0,10 | 0,05 |
| 6. Auftrag | 0,15 | 0,05 | 0,13 | 0,07 |
| 7. Auftrag | 0,15 | 0,05 | 0,14 | 0,07 |
| 8. Auftrag | 0,19 | 0,07 | 0,18 | 0,08 |
| 9. Auftrag | 0,21 | 0,08 | 0,21 | 0,09 |
| 10. Auftrag | 0,22 | 0,09 | 0,22 | 0,10 |

Die Filmaddition eines herkömmlichen Produktes liegt also um über 100 % höher als beim erfindungsgemäßen Schuhpflegemittel. Geht man davon aus, daß ein Schuh im Jahr mindestens 50 x gepflegt wird, so ergibt sich, daß bei einem wenig geeigneten Produkt praktisch eine Versiegelung des Schuhes erfolgt.

| (%-Angaben bei Wachs und Polymeren auf Festkörpergehalt) | Rezeptur A (entspricht Handelsprod.) | Rezeptur B (Testrezeptur) | Rezeptur C (ÖP 319.436) | Rezeptur D | Rezeptur E | Rezeptur F |
|---|---|---|---|---|---|---|
| Montansäure-Esterwachs | Hoechstwachs KSE : 9,0 % (mit Emulgator) | Hoechstwachs KSL : 6,3 % (ohne Emulgator) | — | 1,0 % | 1,0 % | 1,0 % |
| Acrylharz, metallfrei | Neocryl A 45 : 2,9 % | — | — | Neocryl A 45 : 6,8 % | — | — |

(Fortsetzung)

| (%-Angaben bei Wachs und Polymeren auf Festkörpergehalt) | Rezeptur A (entspricht Handelsprod.) | Rezeptur B (Testrezeptur) | Rezeptur C (ÖP 319.436) | Rezeptur D | Rezeptur E | Rezeptur F |
|---|---|---|---|---|---|---|
| Styrol-Acrylat-Copolymer | — | Licomer A 41 : 8,0 % | — | — | Licomer A 41 : 3,0 % | 3,0 % |
| Styrol-Maleinat-Harz | — | — | Ubatol 3000 A : 1,12 % | — | — | — |
| Polyethylen-Wachs | — | Hoechstwachs : PED 521 : 3,0 % | Poligen PE 02 : 3,0 % | VEBA Wachs AV 1 550 : 1,5 % | VEBA Wachs AV 1 550 : 1,5 % | Licomer TMW 1 : 7,0 % |
| Polyethylen-Wachs | — | — | — | Ubatol FPG 947 N : 2,9 % | Ubatol FPG 947 N : 6,4 % | — |
| Acrylharz, metallvernetzt | — | — | Neocryl KW 32 : 9,0 % | — | — | — |
| Tributoxylethyl-phosphat | — | 1,0 % | 2,25 % | 0,5 % | 0,5 % | 0,5 % |
| Dibutylphthalat | 0,5 % | — | — | — | — | — |
| Caprolactam | — | — | 1,2 % | — | — | — |
| Emulgator | — | 2,7 % (NP-6EO-Wachsemulg. 2 106) | NP-2OEO : 0,6 % | Wachsemulg. 2 106 : 0,25 % | Wachsemulg. 2 106 : 0,25 % | 0,15 % |
| Amin | — | Diethylaminothanol : 0,4 % | — | Diethanolamin : 0,2 % | 0,2 % | 0,2 % |
| Ethyldiglykol | — | — | 1,5 % | 1,0 % | 1,0 % | 1,0 % |
| Alkohol | Ethanol : 5,0 % | Ethanol : 5,0 % | — | Isopropanol : 5,0 % | Isopropanol : 5,0 % | 5,0 % |
| FC-Tensid | — | 0,01 % | 0,05 % | 0,115 % | 0,115 % | 0,115 % |
| Silikonentschäumer | — | 0,1 % | 0,05 % | 0,2 % | 0,2 % | 0,2 % |
| Rest Wasser | | | | | | |
| FK-Gehalt in % | 12 | 21 | 16 | 13 | 13 | 12 |

**Ansprüche**

1. Selbstglänzendes Schuh- und Lederpflegemittel in Form einer wäßrigen Emulsion, mit einem Festkörpergehalt von 10-20, vorzugsweise 12-16 Gew.-%, gekennzeichnet durch einen Gehalt - bezogen auf Festkörperanteil - an (A) 4,5-18 Gew.-% eines ternären Wachs/Polymergemisches aus 2-10, vorzugsweise 3-8 Gew.-% Polyethylenwachsen, vorzugsweise anoxydiertenPolyethylenwachsen, 2-10, vorzugsweise 3-8 Gew.-% nicht metallvernetzten Acrylaten oder Styrol-Acrylat-Copolymeren und 0,5-8, vorzugsweise 0,5-4 Gew.-% Montansäureesterwachsen, (B) 0,2-5, vorzugsweise 0,5-2 Gew.-% flüssigen Plastifikatoren, einzeln oder im Gemisch, aus der Gruppe Phthalsäureester, Phosphorsäureester und Etheralkohole, (C) 2-10, vorzugsweise 5 Gew.-% wasserlösliche organische Lösungsmittel, aus der Gruppe aliphatische Mono- und Dialkohole.

**0 017 119**

2. Selbstglänzendes Schuh- und Lederpflegemittel nach Anspruch 1, dadurch gekennzeichnet, daß das durchschnittliche Molekulargewicht der Polyethylenwachse 1 000-20 000, vorzugsweise 2 000-10 000, beträgt.

3. Selbstglänzendes Schuh- und Lederpflegemittel nach Anspruch 2, dadurch gekennzeichnet, daß die Säurezahl der anoxidierten Polyethylenwachse 15-30 beträgt.

4. Selbstglänzendes Schuh- und Lederpflegemittel nach Anspruch 1-3, dadurch gekennzeichnet, daß die flüssigen Plastifikatoren Butylphthalat, Tributoxyethylphosphat, Diethylenglykol-monoethylether, Ethylenglykol-monobutylether oder Diethylenglykol-monobutylether, einzeln oder im Gemisch, sind.

5. Selbstglänzendes Schuh- und Lederpflegemittel nach Anspruch 4, dadurch gekennzeichnet, daß die flüssigen Plastifikatoren Gemische aus Phosphorsäureestern, insbesondere Tributoxyethylphosphat, mit Etheralkoholen sind.

6. Selbstglänzendes Schuh- und Lederpflegemittel nach Ansprüchen 1-4, dadurch gekennzeichnet, daß die wasserlöslichen organischen Lösungsmittel Methanol, Ethanol, Propanol, Ethylenglykol, Butylenglykol oder Propylenglykol sind.

7. Selbstglänzendes Schuh- und Lederpflegemittel nach Ansprüchen 1-6, gekennzeichnet durch einen zusätzlichen Gehalt an Netz- und Verlaufmitteln, Entschäumern, Konservierungsmitteln und Parfüms.

## Claims

1. A self-shining shoe-care and leather-care preparation in the form of an aqueous emulsion having a solids content of from 10 to 20 % by weight and preferably from 12 to 16 % by weight, characterised by a content - based on solids - of (A) from 4.5 to 18 % by weight of a ternary wax/polymer mixture of from 2 to 10 % by weight and preferably from 3 to 8 % by weight of polyethylene waxes, preferably oxidised polyethylene waxes, from 2 to 10 % by weight and preferably from 3 to 8 % by weight of non-metal-crosslinked acrylates or styrene-acrylate copolymers and from 0.5 to 8 % by weight and preferably from 0.5 to 4 % by weight of montanic acid ester waxes, (B) from 0.2 to 5 % by weight and preferably from 0.5 to 2 % by weight of liquid plasticisers - individually or in admixture - from the group comprising phthalic acid esters, phosphoric acid esters and ether alcohols, (C) from 2 to 10 by weight and preferably 5 % by weight of water-soluble organic solvents from the group comprising aliphatic monoalcohols and dialcohols.

2. A self-shining shoe-care and leather-care preparation as claimed in Claim 1, characterised in that the average molecular weight of the polyethylene waxes amounts to between 1 000 and 20 000 and preferably to between 2 000 and 10 000.

3. A self-shining shoe-care and leather-care preparation as claimed in Claim 2, characterised in that the acid number of the oxidised polyethylene waxes amounts to between 15 and 30.

4. A self-shining shoe-care and leather-care preparation as claimed in Claims 1 to 3, characterised in that the liquid plasticisers are butyl phthalate, tributoxy ethyl phosphate, diethylene glycol monoethyl ether, ethylene glycol monobutyl ether or diethylene glycol monobutyl ether, individually or in admixture.

5. A self-shining shoe-care and leather-care preparation as claimed in Claim 4, characterised in that the liquid plasticisers are mixtures of phosphoric acid esters, particularly tributoxy ethyl phosphate, with ether alcohols.

6. A self-shining shoe-care and leather-care preparation as claimed in Claims 1 to 4, characterised in that the water-soluble organic solvents are methanol, ethanol, propanol, ethylene glycol, butylene glycol or propylene glycol.

7. A self-shining shoe-care and leather-care preparation as claimed in Claims 1 to 6, characterised by an additional content of wetting and levelling agents, defoaming agents, preservatives and perfumes.

## Revendications

1. Produit auto-lustrant pour l'entretien des chaussures et des cuirs à l'état d'émulsion aqueuse à une teneur en substances solides de 10 à 20, de préférence de 12 à 16 % en poids, caractérisé en ce qu'il contient — par rapport aux substances solides — (A) de 4,5 à 18 % en poids d'un mélange ternaire cire/polymère consistant en 2 à 10, de préférence 3 à 8 % en poids de cires de polyéthylène, de préférence des cires de polyéthylène oxydées en partie, 2 à 10, de préférence 3 à 8 % en poids d'acrylates non réticulés par des métaux ou de copolymères styrène-acrylate et 0,5 à 8, de préférence 0,5 à 4 % en poids de cires d'esters montaniques, (B) 0,2 à 5, de préférence 0,5 à 2 % en poids de plastifiants liquides, individuellement ou en mélange, pris dans le groupe des esters phtaliques, des esters phosphoriques et des éther-alcools, (C) 2 à 10, de préférence 5 % en poids de solvants organiques hydrosolubles pris dans le groupe des mono- et di-alcools aliphatiques.

2. Produit d'entretien auto-lustrant pour chaussures et cuirs selon la revendication 1, caractérisé en ce que le poids moléculaire moyen des cires de polyéthylène est de 1 000 à 20 000, de préférence de 2 000 à 10 000.

3. Produit d'entretien auto-lustrant pour chaussures et cuirs selon la revendication 2, caractérisé en

6

ce que l'indice d'acide des cires de polyéthylène oxydées en partie est de 15 à 30.

4. Produit d'entretien auto-lustrant pour chaussures et cuirs selon les revendications 1 à 3, caractérisé en ce que les plastifiants liquides sont le phtalate de butyle, le phosphate de tributoxyéthyle, l'éther monoéthylique du diéthylène-glycol, l'éther monobutylique de l'éthylène-glycol ou l'éther monobutylique du diéthylène-glycol, isolément ou en mélange.

5. Produit d'entretien auto-lustrant pour chaussures et cuirs selon la revendication 4, caractérisé en ce que les plastifiants liquides sont des mélanges d'esters phosphoriques, en particulier le phosphate de tributoxyéthyle, avec des éther-alcools.

6. Produit d'entretien auto-lustrant pour chaussures et cuirs selon les revendications 1 à 4, caractérisé en ce que les solvants organiques hydrosolubles sont le méthanol, l'éthanol, le propanol, l'éthylène-glycol, le butylène-glycol ou le propylène-glycol.

7. Produit d'entretien auto-lustrant pour chaussures et cuirs selon les revendications 1 à 6, caractérisé en ce qu'il contient en outre des agents mouillants et d'étalement, des agents anti-mousse, des préservateurs et des parfums.